# EUROPÄISCHE PATENTSCHRIFT

(11) **EP 0 655 312 B1**
(45) Veröffentlichungstag und Bekanntmachung des Hinweises auf die Patenterteilung: **26.08.1998**
(21) Anmeldenummer: 94118170.3
(22) Anmeldetag: 18.11.1994
(51) Int. Cl.: B29C 47/28

(54) **Vorrichtung zum Herstellen eines schlauch- oder rohrförmigen Hohlstranges aus thermoplastischem Kunststoff**
Apparatus for producing pipes or hoses from thermoplastic material
Appareil pour fabriquer des tubes ou tuyaux en matière thermoplastique

(30) Priorität: 23.11.1993 DE 4339671
(43) Veröffentlichungstag der Anmeldung: 31.05.1995
(73) Patentinhaber: Fischer-W. Müller Blasformtechnik GmbH, 53842 Troisdorf (DE)
(72) Erfinder: Döhmen, Willi, Dipl.-Ing., D-41065 Mönchengladbach (DE)
(74) Vertreter: Müller, Gerd, Dipl.-Ing.

(56) Entgegenhaltungen:
- EP-A- 0 191 911
- EP-A- 0 210 725
- EP-A- 0 499 025
- DE-A- 3 427 316
- US-A- 3 801 254

## Beschreibung

Die Erfindung betrifft eine Vorrichtung zum Herstellen eines schlauch- oder rohrförmigen Hohlstranges aus thermoplastischem Kunststoff, bestehend aus einem Blaskopf, der mindestens einen angeschlossenen, das Kunststoffmaterial zuführenden Extruder und mindestens eine in seinem Gehäuse angeordnete Pinole oder Verteilerhülse aufweist, wobei mindestens zwischen der Pinole und dem Gehäuse ein Strömungsraum bzw. Ringspalt für den Hohlstrang ausgebildet ist dem das Kunststoffmaterial über mindestens eine Herzkurve eines Herzkurvenverteilers zugeführt wird.

Eine Vorrichtung dieser Art ist beispielsweise aus der DE-A-2 100 192 oder aus der DE-A-3 427 316 bekannt.

Die zur Zeit bekannten Schlauch- bzw. Blasköpfe arbeiten - und zwar unabhängig von der jeweiligen Anwendung (z.B. für hoch- oder niedrigmolekulare Kunststoffe wie HMPE, HDPE etc.) - entweder auf der Basis eines Stegdornhalterkopfes oder auf der Basis von Pimolenverteilern. Die letzteren lassen sich entweder als sogenannte Herzkurven oder als sogenannte Wendelverteiler ausführen, d.h. zum Verteilen des von mindestens einem Extruder zugeführten thermoplastischen Kunststoffmaterials ist entweder direkt in der Pinole, die in diesem Fall zu dem Gehäuse des Blaskopfes mit einem Ringspalt angeordnet ist, oder sind - wie bei einem Coextrusionskopf bzw. einem einen zweischichtigen Hohlstrang erzeugenden Monolayerkopf in den Außenmantel von zueinander und zu dem Gehäuse des Blaskopfes einen Rinspalt aufweisenden Verteilerhülsen Kanäle als Wendeln oder in Herzkurven eingearbeitet. Diese sorgen dafür, daß der aus dem Extruder von der Seite oder zentral im das Blaskopfgehäuse eingeführte Kunststoff möglichst schnell den Kern, d.h. die Pinole zur Bildung eines Schlauches um 360° umströmt. Bei in Form einer sogenannten Herzkurve eingearbeiteten Verteilerkanälen bzw. -ästen läßt sich - insbesondere bei niederviskosem Material - die Umströmung beschleunigen bzw. verbessern, wenn zwei oder mehrere auf der Hülse angeordnete Herzkurven vorgesehen sind, wobei hierdurch vor allem Baulänge eingespart wird.

Die Vorteile bei der Anwendung von Herzkurven liegen - aufgrund der rheologisch dann erforderlichen Krümmung der Verteilerkanaläste - in der sehr gleichmäßigen Rundumverteilung und Deformationsgeschichte des Materials. Allerdings lassen sich auch beim Pinolenblaskopf Längs- bzw. Bindenähte an der oder den Zusammenflußstellen im extrudierten Schlauch nicht vermeiden, wobei sogar mehrere Zusammenflußstellen entstehen können, nämlich bei Extrusionsmehrfachköpfen mit reduzierter Bauhöhe der Köpfe. Diese Bindenähte bereiten allerdings - vor allem bei sehr hochmolekularen Materialien sogar im fertigen Artikel - große Probleme und stellen Schwachstellen dar, die zudem häufig sichtbar (in Form von Streifen) sind.

Beim Einsatz von Wendelverteilern, wie z.B. aus der EP-A-0 191 911 bekannt, ergibt sich aufgrund der geradlinigen Verteilerkanalkontur ein ungleichmäßiges Verteilen des einzelnen Ast es bzw. Kanals, und erst in der Überlagerung mit weiteren, auf der gleichen Hülse bzw. der Pinole befindlichen Ästen läßt sich ein einigermaßen zufriedenstellendes, jedoch keinesfalls mit einem Herzkurvenverteiler zu vergleichendes Verteilergebnis erreichen. Allerdings bringt die beim Wendelverteiler überlappende Ineinanderschachtelung der verschiedenen Verteilerkanäle als Ergebnis einen Artikel hervor, bei dem beim Aufblasvorgang keine Dünnstellen entstehen, wie das bei mit einem Herzkurvenverteiler erzeugten Artikeln der Fall ist.

Um die bei Herzkurvenverteilern ohne Zweifel gleichmäßige Verteilung ausnutzen und dabei aber nachteilige Bindenähte bzw. Dünnstellen zu vermeiden, ist es aus der DE-A-3 427 316 bekannt, die Zusammenflußstelle des Herzkurvenverteilers durch komplizierte Hülsenanordnungen überlappend zu gestalten und eine sichelförmige Verteilung bzw. Verschweißungsstelle zu erreichen. Hierzu ist es erforderlich, die Äste der einzelnen Herzkurven in radial untereinanderstehende Hülsen abzuzweigen und nachträglich zusammenzuführen, wobei sich erst in der Überlagerung beider Strömungen, d.h. von der inneren und der äußeren Hülse, ein brauchbarer Schlauch erreichen läßt.

Um die Zusammenflußstellen auf zwei zu reduzieren, ist es durch die DE-A 2 100 192 bekanntgeworden, einen Dornhalter mit zwei um 180° versetzten Herzkurven auszubilden. Der Kern bzw. Dorn dieses Blaskopfes besitzt zwei - oder mehr - in Umlaufrichtung sich stetig verbreiternde Einzelkanäle oder Kanalsysteme, die im wesentlichen koaxial zueinander und in Umfangsrichtung gegeneinander versetzt angeordnet sind; in Fließrichtung münden sie vor der Spritzdüse in einen gemeinsamen ringförmigen Sammelkanal. Für jede Herzkurve ist eine - jeweils von der Seite angeströmte - Hülse vorgesehen, und es werden hierbei keine konzentrischen, sondern zwei halbmond- bzw. sichelartige Gebilde mit unterschiedlichen Geometrien coextrudiert. Es ist erforderlich, eine Ergänzung von innerer und äußerer Sichel zu ermöglichen, damit sich ein gleichmäßiger Artikel (Schlauch) erreichen läßt.

Der Erfindung liegt daher die Aufgabe zugrunde, eine gattungsgemäße Vorrichtung bzw. einen Blaskopf der eingangs genannten Art mit einfachen Mitteln so auszugestalten, daß sich eine gleichmäßigere Verteilung des Materials und damit verbesserte Hohlstränge erreichen lassen.

Diese Aufgabe wird auf verblüffend einfache Weise dadurch gelöst, daß sich jede Herzkurve aus zwei um 180° versetzt an ein und derselben Pinole bzw. Verteilerhülse angeordneten, gleichsinnig um die Pinole bzw. Verteilerhülse angewickelten Kanalästen mit sich nach Art eines Wendelverteilers überlappenden Auslaufbereichen zusammensetzt. Es wurde erkannt, daß sich durch die Kombination dieser beiden Verteilerarten (Wendel- und Herzkurvenverteiler) die ihnen jeweils eigenen Vorteile ausschöpfen lassen, ohne dabei die jeweiligen Nachteile in Kauf nehmen zu müssen, d.h. es läßt sich eine gleichmäßige Verteilung ohne nachteilige Bindenähte bzw. Dünnstellen erreichen. So läßt sich beispielweise bei der Coextrusion beim Blasprozeß die zu einer Dünnstelle führende Zusammenflußstelle vermeiden, ohne die rheologisch wesentlich schlechter verteilenden geradförmigen Wendelkanäle verwenden zu müssen. Die Herzkurvenverteilung mit wendelartig, d.h. überlappend ausgebildeten Auslaufbereichen bzw. Endästen bewirkt weiterhin, daß die beim reinen Wendelverteiler nachhaltige Rotation des Hohlstranges bzw. Schlauches äußerst geringfügig ausfällt; sie läßt sich daher mit einfachen, ergänzenden Maßnahmen völlig verhindern. Für Blasköpfe, die hochmolekulares Polyäthylen extrudieren, ergibt sich der Vorteil, daß sich zwei völlig gleichmäßig verteilte Schläuche ineinander extrudieren lassen.

Zweckmäßige Weiterbildungen der Erfindung sind Gegenstand der abhängigen Ansprüche.

Eine Ausgestaltung der Erfindung sieht vor, daß ein erster wendelartiger Herzkurvenverteiler mit überlappenden Kanalästen in eine eine Zugstange konzentrisch umschließende erste Verteilerhülse und ein zweiter - gegenüber dem ersten um vorzugsweise 180° versetzter - wendelartiger Herzkurvenverteiler mit überlappenden Kanalästen in eine die erste Verteilerhülse unter Bildung eines Ringspaltes bzw. Strömungsraumes konzentrisch umschließende zweite Verteilerhülse eingearbeitet ist.

Ein Ausführungsbeispiel des Gegenstandes der Erfindung ist am Beispiel eines ohne weiteres mit einem Coextrusionskopf vergleichbaren, zweischichtige Artikel bzw. Hohlstränge erzeugenden Monolayerkopfes näher erläutert. Es zeigen:
- Fig.1: den Längsschnitt eines Blaskopfes, der einen Herzkurvenverteiler mit einander wendelartig überlappenden Auslaufbereichen seiner Kanaläste aufweist;
- Fig.2: als Einzelheit des Blaskopfes nach Fig. 1 die äußere Verteilerhülse mit in ihren Außenmantel eingearbeitetem wendelartigen Herzkurvenverteiler;
- Fig.3: als Einzelheit der Fig. 1 die innere, eine Zugstange unmittelbar konzentrisch umschließende Verteilerhülse (Pinole) mit in ihren Außenmantel eingearbeitetem wendelartigen Herzkurvenverteiler;
- Fig.4: als Einzelheit die in den Fig. 2 und 3 gezeigten Verteilerhülsen in ihrer ineinandergefügten Einbaulage;
- Fig.5: die Abwicklung eines Herzkurvenverteilers;
- Fig.6: die Abwicklung eines Wendelverteilers; und
- Fig.7: die Abwicklung eine Herzkurvenverteilers mit nach Art eines Wendelverteilers überlappend ausgebildeten Auslaufbereichen.

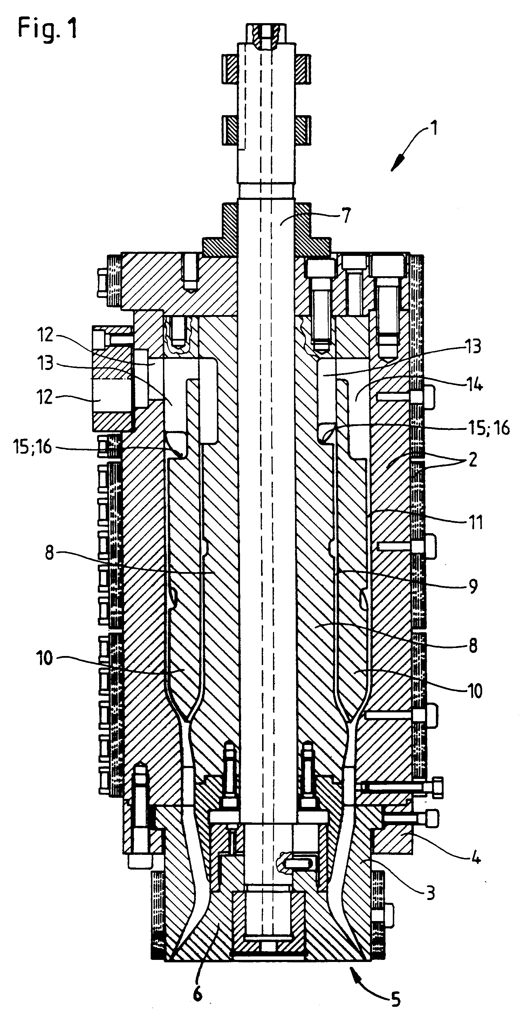

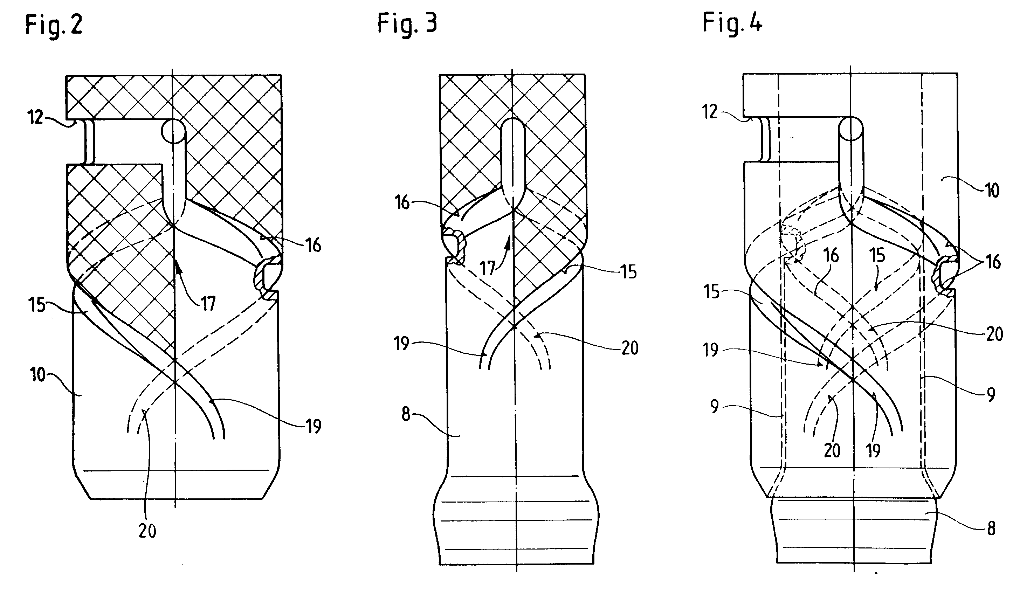

Ein in Fig. 1 gezeigter Blaskopf 1 besteht aus einem mehrteiligen Gehäuse 2, einem Düsenring 3, einem Düsenhaltering 4 und einer an dem von der Düse 5 abgewandten Ende des Gehäuses 2 festgelegten , mit einem Dorn 6 versehenen, der Einstellung des Düsenbereichs dienenden Zugstange 7. Auf dieser ist konzentrisch eine erste, innere , die Pinole darstellende Verteilerhülse 8 (vgl. Fig. 3) angeordnet, und unter Bildung eines Ringspaltes bzw. Strömungsraumes 9 schließt sich in konzentrischer Anordnung eine zweite, äußere Verteilerhülse 10 (vgl. Fig.2) an, wobei zwischen dem Gehäuse 2 und der zweiten Verteilerhülse 10 ein weiterer Ringspalt bzw. Strömungsraum 11 ausgebildet ist.

Das zu einem Hohlstrang zu formende Kunststoffmaterial wird der Düse 5 - deren Durchmesser zwischen einem minimalen und einem maximalen Wert variabel einstellbar ist - aus nicht dargestellten Extrudern über Anschlüsse 12 zugeführt, wobei das Material zunächst in Verteilerräume 13, 14 gelangt und dann die ringförmigen, in der Düse 5 mündenden Strömungsräume 9 bzw. 11 durchfließt. Zur gleichmäßigen Verteilung des in die Strömungsräume 9, 11 fließenden Kunststoffmaterials sind im Außenmantel sowohl der ersten, inneren Verteilerhülse bzw. der Pinole 8 als auch der zweiten, äußeren Verteilerhülse 10 Kanaläste 15, 16 eingearbeitet.

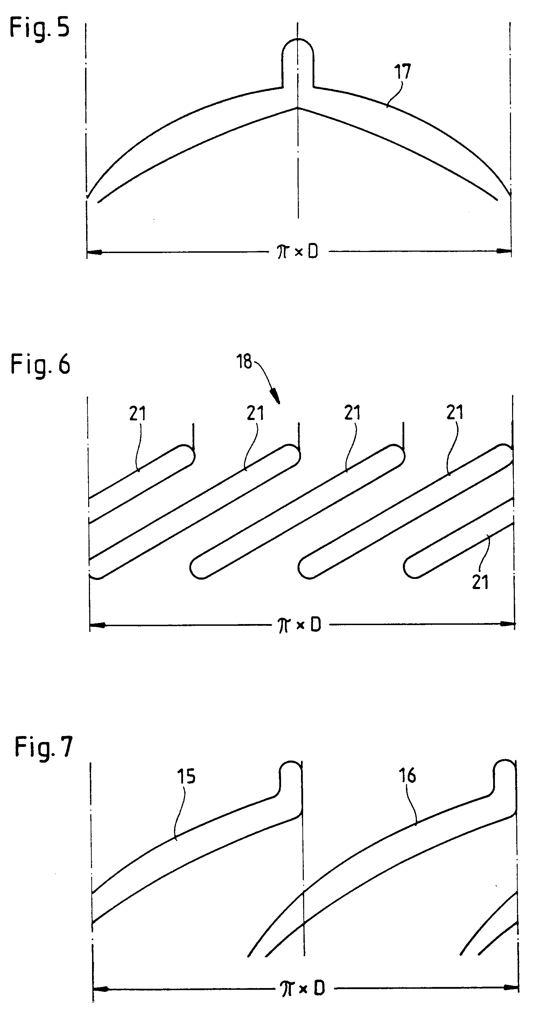

Die Kanaläste 15, 16 sind so gestaltet, daß sie aus einer Kombination eines Herzkurvenverteilers 17 (vgl. die in Fig. 5 gezeigte Abwicklung) und eines Wendelverteilers 18 (vgl. die in Fig. 6 gezeigte Abwicklung) bestehen.Der Verlauf der Kanäle 15, 16 ist so, daß sich die Auslaufbereiche 19 bzw. 20 des Herzkurvenverteilers 17 einander nach Art der Wendeln 21 des Wendelverteilers 18 überlappen, wie das anschaulich der die Abwicklung des wendelartigen Herzkurvenverteilers mit überlappenden Auslaufbereichen der Kanaläste zeigenden Fig. 7 zu entnehmen ist.

Die Kanaläste 15, 16 sind somit entgegengesetzt um die Pinole bzw. die Verteilerhülsen 8, 10 herumgeführt, so daß sich ihre Auslaufbereiche 19 bzw. 20 nach Art eines Wendelverteilers überlappen. Diese Gestaltung ermöglicht es, daß die Vorteile beider Verteilerarten vereint sind, was eine gleichmäßige Verteilung des Kunststoffmaterials ohne Bindenähte bzw. Dünnstellen am extrudierten bzw. aufgeblasenen Hohlkörper (Schlauch) gewährleistet. Wie in Fig. 4 dargestellt wird, sind in der Einbaulage (vgl. Fig. 1) die Verteilerhülsen 8, 10 bzw. ihre wendelartig ausgebildeten Herzkurvenverteiler gegeneinander versetzt angeordnet.

## Patentansprüche

1. Vorrichtung zum Herstellen eines schlauch- oder rohrförmigen Hohlstranges aus thermoplastischem Kunststoff, bestehend aus einem Blaskopf (1), der mindestens einen angeschlossenen, das Kunststoffmaterial zuführenden Extruder und mindestens eine in seinem Gehäuse (2) angeordnete Pinole oder Verteilerhülse (8) aufweist, wobei mindestens zwischen der Pinole (8) und dem Gehäuse (2) ein Strömungsraum bzw. Ringspalt (9, 11) für den Hohlstrang ausgebildet ist, dem das Kunststoffmaterial über mindestens eine Herzkurve (17) eines Herzkurvenverteilers zugeführt wird,
**dadurch gekennzeichnet**,
daß sich jede Herzkurve (17) aus zwei um 180° versetzt an ein und derselben Pinole bzw. Verteilerhülse (8) angeordneten, gleichsinnig um die Pinole bzw. Verteilerhülse (8) abgewickelten Kanalästen (15, 16) mit sich nach Art eines Wendelverteilers überlappenden Auslaufbereichen (19, 20) zusammensetzt.

2. Vorrichtung nach Anspruch 1,
**dadurch gekennzeichnet**,
daß ein erster wendelartiger Herzkurvenverteiler mit überlappenden Kanalästen (15, 16) in eine eine Zugstange (7) konzentrisch umschließende erste Verteilerhülse (8) und ein zweiter wendelartiger Herzkurvenverteiler mit überlappenden Kanalästen (15, 16) in eine die erste Verteilerhülse (8) unter Bildung eines Ringspaltes bzw. Strömungsraumes (9) konzentrisch umschließende zweite Verteilerhülse (10) eingearbeitet ist.

3. Vorrichtung nach Anspruch 2,
**dadurch gekennzeichnet**,
daß die beiden wendelartig ausgebildeten Herzkurvenverteiler um 180° gegeneinander versetzt sind.

## Claims

1. Apparatus for producing pipes or hoses from thermoplastic material, consisting of a blow head (1) which has at least one connected extruder feeding the plastic material and at least one mandrel or spreader sleeve (8) located in its housing (2), whereby a flow space or annular gap (9, 11) for the hollow strand is formed at least between the mandrel (8) and the housing (2), to which strand the plastic material is fed via at least one cardioid (17) of a cardioid spreader,
**characterized in that**
each cardioid (17) is composed of two channel branches (15, 16) located offset by 180° at one and the same mandrel or spreader sleeve (8), wound in the same direction round the mandrel or spreader sleeve (8), with overlapping discharge areas (19, 20) in the nature of a helical spreader.

2. Apparatus according to claim 1,
**characterized in that**
a first helical-type cardioid spreader with overlapping channel branches (15, 16) is integrated into a first spreader sleeve (8) concentrically enveloping a tie rod (7), and a second helical-type cardioid spreader with overlapping channel branches (15, 16) into a second spreader sleeve (10) concentrically enclosing the first spreader sleeve (8) while forming an annular gap or flow space (9).

3. Apparatus according to claim 2,
**characterized in that**
the two helically formed cardioid spreaders are offset from each other by 180°.

## Revendications

1. Appareil pour fabriquer des tubes ou tuyaux en matière thermoplastique, se composant d'une tête de soufflage (1), qui présente au moins une extrudeuse raccordée guidant la matière plastique et au moins un fourreau ou une douille de distribution (8) logée dans son boîtier (2), sachant qu'au moins un espace d'écoulement, voire une fente annulaire (9, 11) est constitué entre le fourreau (8) et le boîtier (2) pour le tube auquel est amenée la matière plastique par au moins une cardioïde (17) d'un distributeur cardioïde,
**caractérisé en ce que**
chaque cardioïde (17) se compose de deux dérivations de canal (15, 16) décalées de 180° disposées sur un et même fourreau, voire douille de distribution (8), se développant dans le même sens autour du fourreau, voire la douille de distribution (8) à la façon d'un distributeur hélicoïdal dans les zones de sorties (19, 20) se chevauchant.

2. Appareil selon la revendication 1,
**caractérisé en ce**
**qu**'un premier distributeur cardioïde spiralé à dérivations de canal (15, 16) se chevauchant est intégré dans une première douille de distribution (8) qui entoure concentriquement une barre de traction (7) et un deuxième distributeur cardioïde spiralé à dérivations de canal (15, 16) intégré dans une deuxième doute de distribution (10) qui entoure concentriquement la première douille de distribution (8) en formant une fente circulaire, voire un espace d'écoulement (9).

3. Appareil selon la revendication 2.
**caractérisé en ce que**
les deux distributeurs cardioïdes de constitution spiralée sont décalés de 180° l'un par rapport à l'autre.
